# EUROPÄISCHE PATENTSCHRIFT

(11) **EP 2 632 787 B1**
(45) Veröffentlichungstag und Bekanntmachung des Hinweises auf die Patenterteilung: **18.05.2016**
(21) Anmeldenummer: 11775790.6
(22) Anmeldetag: 26.10.2011
(51) Int. Cl.: B62B 3/04, B60P 1/38, B60P 1/64, B62D 63/08, B62D 53/00, B65G 1/04, B66F 9/07

(54) **TRAILERZUGANHÄNGER MIT TRÄGERVORRICHTUNG ZUM TRANSPORT VON FLURFÖRDERFAHRZEUGEN**
ROAD TRAIN TRAILER WITH A CARRYING DEVICE FOR TRANSPORTING WORKING VEHICLE
REMORQUE D'UN TRAIN DE CHARIOTS EQUIPÉE D' UN MECANISME PORTEUR POUR TRANSPORT DE CHARIOTS DE MANUTENTION

(30) Priorität: 29.10.2010 DE 102010049753
(43) Veröffentlichungstag der Anmeldung: 04.09.2013
(73) Patentinhaber: LKE Gesellschaft für Logistik- und Kommunikations- Equipment mbH, 45768 Marl (DE)
(72) Erfinder: EILDERS, Joachim, 45529 Hattingen (DE)
(74) Vertreter: Cohausz & Florack
(86) Internationale Anmeldenummer: PCT/EP2011/068738
(87) Internationale Veröffentlichungsnummer: WO 2012/055907

(56) Entgegenhaltungen:
- EP-A2- 1 972 521
- WO-A1-2006/111620
- DE-U1-202009 008 725
- DE-U1-202011 000 280
- DE-U1-202011 100 028
- FR-A1- 2 879 989

## Beschreibung

Die Erfindung betrifft einen Anhänger mit einer Trägervorrichtung zum Transport mindestens eines Flurförderfahrzeugs, insbesondere handbetriebenen Flurförderfahrzeugs, und mit Verbindungselementen zum Verbinden des Anhängers mit weiteren gleichartigen Anhängern an einander gegenüberliegenden Querseiten, wobei die Trägervorrichtung wenigstens eine Übernahmeeinrichtung zur Aufnahme eines Flurförderfahrzeugs aufweist.

Flurförderfahrzeuge im Sinne der Erfindung werden zum innerbetrieblichen Warentransport verwendet, etwa um bestimmte Bearbeitungsstationen mit zu bearbeitenden Halbzeugen zu beliefern und die gefertigten Produkte zum Warenausgang des Betriebs zu bringen. Es sind viele verschiedene Flurförderfahrzeuge, wie etwa Plattformwagen zum Tragen von Behältern oder Gütern, Palettenwagen zur Aufnahme von Paletten sowie Gittenbox- und Containerwagen als fahrbare Gittenboxen bzw. Container, bekannt.

Um mehrere Flurförderfahrzeuge gleichzeitig transportieren zu können, können an diesen Einrichtungen, wie etwa Deichseln und Kupplungen, vorgesehen sein. Die Flurförderfahrzeuge können so untereinander verbunden und gemeinsam etwa mittels eines Zugfahrzeugs bewegt werden. Entsprechende Flurförderfahrzeuge sind jedoch infolge der zusätzlichen Einrichtungen teuer in der Anschaffung.

Alternativ können Anhänger der genannten Art eingesetzt werden. Diese können dann jeweils wenigstens ein Flurförderfahrzeug aufnehmen, ohne dass die zu transportierenden Flurförderfahrzeuge untereinander verbunden werden müssen. Stattdessen sind die Anhänger an ihren Vorderseiten und Rückseiten mit Verbindungselementen versehen, um einen Zug aus mehreren gleichartigen Anhängern zusammenstellen zu können. Ein solcher Zug kann bedarfsweise von einer Zugmaschine gezogen werden. Die Verbindungselemente sind an der Vorderseite meist als Deichsel und am Heck als Kupplung zum Ankuppeln einer entsprechenden Deichsel ausgebildet. Die Vorderseite und Rückseite sind im Wesentlichen quer zur Transportrichtung des jeweiligen Anhängers angeordnet und zum Beladen mit Flurförderfahrzeugen nur schwer zugänglich. Daher werden die Anhänger von einer Längsseite aus be- und entladen.

In diesem Zusammenhang haben sich insbesondere zwei Systeme bewährt. Bei einem System können die Flurförderfahrzeuge mit den Anhängern sicher verriegelt werden. Die Flurförderfahrzeuge werden dann durch die Anhänger geführt, von diesen aber nicht getragen. Die Flurförderfahrzeuge rollen selbsttätig im Zug aus Anhängern mit. Dazu müssen die Flurförderfahrzeuge jedoch einerseits an die Abmessungen der Anhänger angepasst sein und andererseits vier Lenkrollen aufweisen. Flurförderfahrzeuge mit nicht lenkbaren Blockrollen oder Flurförderfahrzeuge mit unterschiedlichen Abmessungen sind für dieses Transportsystem ungeeignet.

Derartige Flurförderfahrzeuge können besser mit Anhängern transportiert werden, die eine Trägervorrichtung zum Tragen der Flurförderfahrzeuge während des Transports aufweisen.

Hierzu stellen die Trägervorrichtungen etwa eine horizontale Transportebene bereit, auf der die Flurförderfahrzeuge während des Transports stehen können. Zum Zwecke des Be- und Entladens umfasst die Trägervorrichtung an den Längsseiten des Anhängers Übernahmeeinrichtungen, die als Rampen ausgebildet sein können. Die Rampen werden zum Be- und Entladen nach unten geschwenkt und erlauben so das Auffahren der Flurförderfahrzeuge mit deren Rollen auf die Transportebene. Nach dem Beladen werden die Rampen in eine Transportstellung nach oben geschwenkt. Da die Flurförderfahrzeuge beim Be- und Entladen die Rampen hinauf und wieder hinunter gefahren werden und die Rampen aus Platzgründen recht kurz ausgebildet sein müssen, bietet sich dieses System nicht für schwer beladene Flurförderfahrzeuge oder Flurförderfahrzeuge mit geringer Bodenfreiheit an. Die Rampen sind dann zu steil, um die Flurförderfahrzeuge bequem und sicher be- und entladen zu können.

Weitere Anhänger der eingangs genannten Art sind in der FR 2879 989 A1, der DE 20 2009 008 725 U1 und der DE 20 2011 100 028 U1 sowie der WO 2006/111620 A1 beschrieben. Zudem beschreibt die DE 20 2011 000 280 U1 Anhänger nach dem Oberbegriff von Anspruch 1. Diese Anhänger eigenen sich nur für bestimmte Flurförderfahrzeuge. Zudem ist die Aufnahme der Flurförderfahrzeuge recht aufwendig.

Der vorliegenden Erfindung liegt folglich die Aufgabe zugrunde, die eingangs genannten und zuvor näher beschriebenen Anhänger derart auszugestalten und weiterzubilden, dass auch schwerere Flurförderfahrzeuge und/oder Flurförderfahrzeuge mit geringerer Bodenfreiheit auf einfache Weise transportiert werden können, ohne die Flexibilität für den Transport von Flurförderfahrzeugen unterschiedlicher Abmessungen zu stark einzuschränken.

Diese Aufgabe ist durch einen Anhänger mit den Merkmalen des Anspruchs 1 gelöst.

Die Erfindung hat erkannt, dass ein Anhänger auch problemlos mit schwereren Flurförderfahrzeugen be- und entladen werden kann, wenn nicht bloß die Übernahmeeinrichtung, sondern gleich die Trägervorrichtung an sich aus der Transportstellung in Richtung einer Längsseite verstellt wird. Dadurch kann ein deutlich flacherer, beim Be- und Entladen von den Flurförderfahrzeugen zu überwindender Neigungswinkel realisiert werden. Unter der Transportstellung wird vorliegend die Stellung der Trägervorrichtung verstanden, die die Trägervorrichtung während des Transports des Flurförderfahrzeugs einnimmt.

Erfindungsgemäß ist es also möglich, die Übernahmeeinrichtung, etwa in Form einer Rampe, und gleichzeitig auch die Trägervorrichtung in Form der Transportebene, welche das Flurförderfahrzeug tragen soll, zur gewünschten Seite zu verschwenken. Der vom Flurförderfahrzeug zu bewältigende Höhenunterschied ist also nicht allein über die Länge der Rampe zu bewältigen, da auch die Trägervorrichtung als solche zur entsprechenden Seite geneigt wird.

Die Verstellung der Trägervorrichtung erfolgt , indem die Trägervorrichtung aus der Transportstellung in Richtung der entsprechenden Längsseite verschwenkt wird.

Die Trägervorrichtung kann ausgehend von der Transportstellung zu einander gegenüberliegenden Längsseiten verstellt werden. Auf diese Weise ist es möglich, den Anhänger wahlweise von der einen Längsseite oder von der anderen Längsseite zu beladen bzw. zu entladen. Auch in diesem Fall ist es im Übrigen aus konstruktiver Sicht vorgesehen, dass die Trägervorrichtung zu beiden Längsseiten verschwenkbar ausgebildet ist. Um das Be- und Entladen des Flurförderfahrzeugs zu erleichtern, ist eine Übernahmeeinrichtung in Form einer Transporteinrichtung vorgesehen. Die Transporteinrichtung dient beim Beladen dem Transport des Flurförderfahrzeugs auf den Anhänger und/oder beim Entladen dem Transport des Flurförderfahrzeugs vom Anhänger. Die Verwendung einer entsprechenden Transporteinrichtung ist zweckmäßig, wenn das Flurförderfahrzeug nicht auf den eigenen Laufrollen auf den Anhänger ausgeschoben und/oder von diesem herunter geschoben wird. Diese Übernahmeeinrichtungen führen z.B. zu einer verringerten Reibung beim Be- und Entladen der Flurförderfahrzeuge, während diese entlang der Übernahmeeinrichtungen verschoben werden. Als Transporteinrichtung kommen insbesondere Rollenförderer und/oder Bandförderer in Frage, weil diese wenig Platz benötigen und das Be- und Entladen stark vereinfachen können. Alternativ oder zusätzlich kann auch eine Mehrzahl von Transporteinrichtungen vorgesehen sein, etwa um das Gewicht des Flurförderfahrzeugs gleichmäßig auf den Transporteinrichtungen verteilen zu können.

Damit das Flurförderfahrzeug während des Transports sicher auf dem Anhänger gehalten wird, kann die Übernahmeeinrichtung eine Blockiervorrichtung zum Blockieren der Transporteinrichtung aufweisen. Dies ist insbesondere dann der Fall, wenn sich die Trägervorrichtung in einer Transportstellung, insbesondere in einer horizontalen Stellung, befindet. Um Fehlbedienungen zu vermeiden, kann die Blockiervorrichtung so ausgebildet sein, dass sie die Transporteinrichtung und damit ein versehentliches Bewegen des Flurförderfahrzeugs relativ zur Transporteinrichtung automatisch blockiert, wenn die Trägervorrichtung die Transportstellung einnimmt.

Alternativ oder zusätzlich kann auch eine Blockiervorrichtung vorgesehen sein, die das Flurförderfahrzeug in der Transportstellung der Trägervorrichtung blockiert. Das Blockieren des Flurförderfahrzeugs kann beispielsweise automatisch und/oder zwangsweise erfolgen, so dass das Blockieren vom Benutzer nicht vergessen werden kann.

Das Be- und Entladen des Anhängers mit dem Flurförderfahrzeug kann für den Bediener weiter vereinfacht werden, indem mindestens eine Antriebseinrichtung zum Antrieb der wenigstens einen Transporteinrichtung vorgesehen ist. Die Antriebseinrichtung kann aus Gründen des Platzbedarfs und des Gewichts vorzugsweise elektromechanisch, elektrohydraulisch, hydraulisch oder pneumatisch arbeiten. Bedarfsweise kann die Antriebseinrichtung so konzipiert sein, dass sie die Transporteinrichtung antreibt, sobald diese zu einer der beiden Längsseiten verstellt ist. Alternativ könnte zunächst erkannt werden, ob sich ein Flurförderfahrzeug auf der Trägervorrichtung befindet oder nicht, um dann die Transportrichtung der Transporteinrichtung entsprechend vorzugeben.

Die Transporteinrichtung kann so ausgebildet sein, dass sich beim Be- und Entladen des Flurförderfahrzeugs ein Reibschluss zwischen der Transporteinrichtung und dem Flurförderfahrzeug einstellt. Dies bietet sich insbesondere dann an, wenn die Transporteinrichtung angetrieben ist. Das Flurförderfahrzeug kann dann reibschlüssig auf die Trägervorrichtung hinaufgezogen werden. Um noch größere Kräfte zwischen der Transporteinrichtung und dem Flurförderfahrzeug als bei einer rein reibschlüssigen Verbindung übertragen zu können, kann die Transporteinrichtung auch einen Zahnriemen mit einer äußeren Verzahnung und/oder eine Mitnehmerkette aufweisen.

Damit das Verstellen, nämlich das Verschwenken, der Trägervorrichtung bequem und zuverlässig erfolgt, kann mindestens eine Antriebseinrichtung zum Verstellen der Trägervorrichtung vorgesehen sein. Bedarfsweise erfolgt das Verstellen der Trägervorrichtung zu einander gegenüberliegenden Längsseiten durch Aktivierung der Antriebseinrichtung. Dies erhöht die Flexibilität und die Bequemlichkeit beim Einsatz des Anhängers. Auch bei dieser Antriebseinrichtung kommt aus Gründen des Gewichts und des Platzbedarfs vorzugsweise ein elektromechanischer, ein elektrohydraulischer, ein hydraulischer oder ein pneumatischer Antrieb in Frage.

Um ein unbeabsichtigtes Verstellen der Trägervorrichtung ausgehend von der Transportstellung zu vermeiden, kann der Transportvorrichtung eine Sicherungsvorrichtung zugeordnet sein. Auf diese Weise wird eine Lagesicherung der Trägervorrichtung erreicht.

Zur Positionierung der Trägervorrichtung in der Transportstellung und/oder in wenigstens zu einer Längsseite verstellten Stellung kann wenigstens eine Gasdruckfeder vorgesehen sein. Wenn die Trägervorrichtung in allen drei unterschiedlichen Stellungen positioniert werden soll, bietet sich insbesondere die Verwendung von zwei Gasdruckfedern an. Unter einem Positionieren wird vorliegend verstanden, dass beim Verstellen der Trägervorrichtung aus der entsprechenden Stellung zunächst eine Rückstellkraft überwunden werden muss, die beispielsweise durch die Rückstellkraft der Gasdruckfeder gebildet wird, um aus der entsprechenden Stellung der Trägervorrichtung in die gewünschte Stellung der Trägervorrichtung zu gelangen. Sobald ein bestimmter Druckpunkt zwischen zwei Stellungen von der Trägervorrichtung überwunden ist, gelangt die Trägervorrichtung in die nächste Stellung in der Bewegungsrichtung. Dies erfolgt insbesondere im unbeladenen Zustand der Trägervorrichtung vorzugsweise selbsttätig. Es handelt sich also nicht um eine Blockierung der Lageposition. Wohl aber wird die Trägervorrichtung vorzugsweise selbst, jedenfalls im unbeladenen Zustand der Trägervorrichtung, durch die wenigstens eine Gasdruckfeder in der wenigstens einen Stellung gehalten.

Die Trägervorrichtung weist wenigstens zwei parallele Trägerarme auf. Die Trägerarme tragen das Flurförderfahrzeug. Durch die Verwendung entsprechender Trägerarme wird eine höhere Flexibilität für den Einsatz des Anhängers erreicht. Insbesondere auf die Verwendung des Anhängers mit unterschiedlichen Flurförderfahrzeugen wirkt sich die Verwendung von wenigstens zwei Trägerarmen positiv aus. In diesem Zusammenhang bietet es sich an, wenn jeder Trägerarm eine Übernahmeeinrichtung zum Übernehmen des Flurförderfahrzeugs aufweist.

In einer weiteren Ausgestaltung kann sich die Trägervorrichtung, vorzugsweise die beiden Trägerarme, in Richtung wenigstens einer der Längsseiten verjüngen. Dies erlaubt ein geeignetes Verstellen der Trägervorrichtung und kann sicherstellen, dass eine breite Auflage der Trägervorrichtung in der zur wenigstens einen Längsseite verstellten Stellung auf dem Boden erreicht wird. Außerdem können problemlos Flurförderfahrzeuge mit unterschiedlichen Bodenfreiheiten auf den Anhänger aufgeladen werden.

Um die Flexibilität der Verwendung des Anhängers zu verbessern, ist die Trägervorrichtung zwischen zwei den Querseiten zugeordneten Traversen vorgesehen, die dem Fahrgestell des Anhängers zugeordnet sein und die Rollen des Anhängers tragen können. Das Fahrgestell des Anhängers wird daher durch die verstellbare Trägervorrichtung nicht nachteilig beeinflusst. Um zudem noch eine geeignete Befestigung für die Trägervorrichtung bereitzustellen, ist es bevorzugt, wenn die Traversen etwa mittig in Längsrichtung miteinander verbundenen sind. Dies ist platz- und materialsparend.

Zwischen den Traversen ist eine mit der Trägervorrichtung verbundene Welle zum Verstellen bzw. zum Antrieb der Trägervorrichtung vorgesehen sein.

Zwischen dem wenigstens einen Trägerarm und den Traversen des Anhängers ist ein durchgehender Spalt vorgesehen, in den in der Transportstellung die Rollen des Flurförderfahrzeugs eingreifen. Wenn der Spalt hinreichend groß und die Trägervorrichtung nicht zu breit gewählt werden, können Flurförderfahrzeuge mit sehr unterschiedlichen Längen und/oder Breiten, insbesondere Flurförderfahrzeuge mit unterschiedlichen Rollenabständen, befördert werden.

Wenn die Traversen Teil des Fahrgestells sind und sich somit beim Verstellen der Trägervorrichtung nicht auch verstellen, kann die Trägervorrichtung über die wenigstens eine Gasdruckfeder mit den Traversen verbunden sein. Die Traversen können somit zugleich als Bezugspunkt für die Verstellung genutzt werden.

Vor dem Beladen des Anhängers mit einem Flurförderfahrzeug wird dieses zunächst auf der entsprechenden Längsseite gegenüber dem Anhänger vorpositioniert oder umgekehrt. Zudem wird die Trägervorrichtung zur entsprechenden Längsseite des Anhängers verstellt, insbesondere verschwenkt. Danach wird das Flurförderfahrzeug auf die Übernahmeeinrichtung geschoben oder mittels eines Antriebs gezogen. Anschließend wird die Trägervorrichtung in eine Transportstellung verstellt, nämlich verschwenkt, in der das Flurförderfahrzeug problemlos transportiert werden kann. In dieser Transportstellung können die Trägervorrichtung als solche, die Übernahmeeinrichtung als solche und/oder das Flurförderfahrzeug zum Vermeiden eines versehentlichen Verstellens blockiert werden. Dazu kommt beispielsweise eine Verrastung in Frage. Möglich wäre neben einem entsprechenden Formschluss auch eine reibschlüssige Verbindung.

Die Übernahmeeinrichtung weist vorzugsweise eine oder mehrere trapezförmige Trägerarme auf, an denen jeweils ein Zahnriemen, eine Mitnehmerkette oder Rollenbahnen drehbar bzw. beweglich gelagert sind. Die Trägerarme können durch einen Längsträger miteinander drehstarr verbunden sein. Zwischen den Trägerarmen und den die Laufrollen des Anhängers tragenden Traversen des Fahrgestells sind Aussparungen zur Aufnahme der Laufrollen eines aufzunehmenden Flurförderfahrzeuges (Ladungsträger) ausgebildet.

Die Transportvorrichtung wird dann in ihre Ausgangslage, d.h. die Transportstellung, zurückverstellt. Die Sicherung des Flurförderfahrzeuges (Ladungsträger) auf dem Anhänger erfolgt vorzugsweise einzig durch Reibschluss zwischen dem Flurförderfahrzeug (Ladungsträger) und der Transportbahn. Bei Bedarf kann diese Sicherung durch zusätzliche, etwa formschlüssige, Sicherungen ergänzt oder ersetzt werden.

Bei einem auf dem Anhänger aufzunehmenden Flurförderfahrzeug handelt es sich beispielsweise um eine mit Laufrollen ausgestattete Gitterbox oder um einen Laufrollen aufweisenden Plattformwagen.

Das Absetzen des Flurförderfahrzeuges (Ladungsträger) vom Anhänger erfolgt in umgekehrter Reihenfolge des oben beschriebenen Aufnahmevorganges, wobei die Abfolge der einzelnen Schritte variieren kann. Die Richtung in der das Flurförderfahrzeug (Ladungsträger) abgesetzt wird, ist dabei vorzugsweise unabhängig von der Richtung, in der es auf den Anhänger aufgebracht wurde.

Die Erfindung wird nachfolgend anhand einer wenigstens ein Ausführungsbeispiel darstellenden Zeichnung näher erläutert. In der Zeichnung zeigen
- Fig. 1 bis 4: ein Ausführungsbeispiel des erfindungsgemäßen Anhängers (Systems) während verschiedener Phasen der Aufnahme eines Flurförderfahrzeugs (Ladungsträger) in perspektivischer Ansicht,
- Fig. 5: der Anhänger aus Fig. 1 bis 4 in einer Transportstellung mit aufgenommenem Flurförderfahrzeug in perspektivischer Ansicht und
- Fig. 6 bis 9: den Anhänger aus Fig. 1 bis 4 während verschiedener Phasen des Absetzens des Flurförderfahrzeugs (Ladungsträger) in perspektivischer Ansicht.

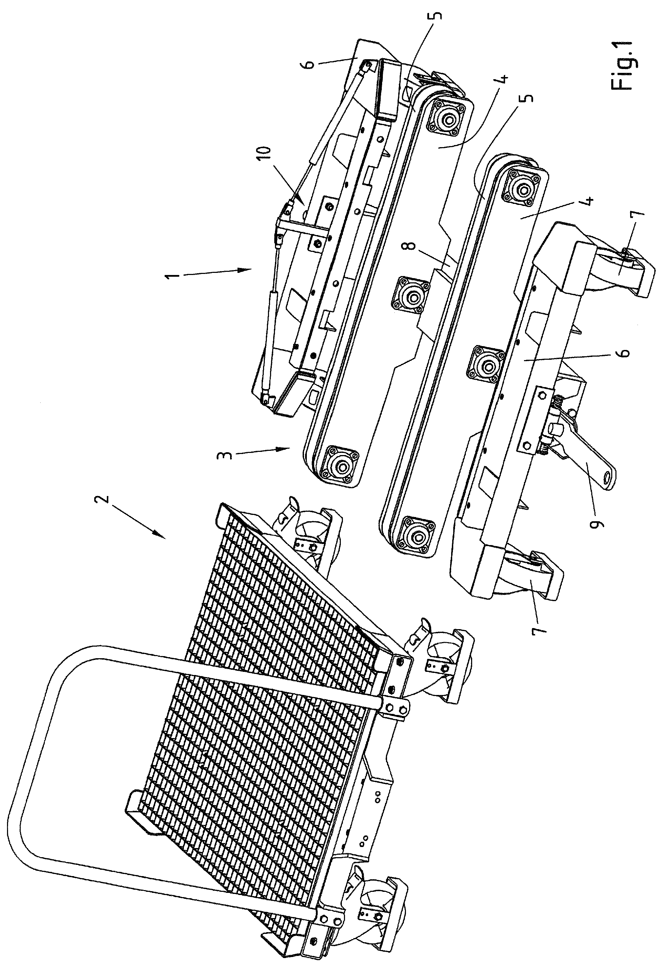

In der Fig. 1 ist ein Anhänger 1 zur Aufnahme und zum Transport eines Flurförderfahrzeugs 2 in Form eines Plattformwagens dargestellt. Es könnte sich bei dem Flurförderfahrzeug 2 alternativ auch um einen Laufrollen aufweisenden Gitterboxwagen oder dergleichen handeln.

Der dargestellte und insoweit bevorzugte Anhänger 1 weist eine schwenkbar ausgebildete Trägervorrichtung 3 mit zwei im Wesentlichen parallel zueinander verlaufenden Trägerarmen 4 auf, die jeweils eine Übernahmeeinrichtung 5 in Form eines Bandförderers tragen. Die Trägerarme sind über ein Längsprofil drehstarr miteinander verbunden. Zu beiden Seiten der Trägervorrichtung 3 befinden sich den Enden des Anhängers 1 zugeordnete Traversen 6, die ihren äußeren Enden zugeordnete Laufrollen 7 tragen. Die Traversen 6 sind beim dargestellten und insoweit bevorzugten Anhänger 1 über einen Längsträger 8 miteinander verbunden. Der Längsträger 8 trägt zudem die Trägervorrichtung 3. Der dargestellte Anhänger 1 weist ferner an den einander gegenüberliegenden Querseiten eine Deichsel 9 und eine Anhängerkupplung 10 auf, um den Anhänger 1 an beiden Seiten mit weiteren baugleichen Anhängern verbinden zu können. Die Trägervorrichtung 3 ist als solche verschwenkbar an einer Welle fixiert, und zwar derart, dass die Trägervorrichtung 3 aus der in Fig. 1 dargestellten Transportstellung zu beiden Längsseiten des Anhängers 1 verschwenkt werden kann.

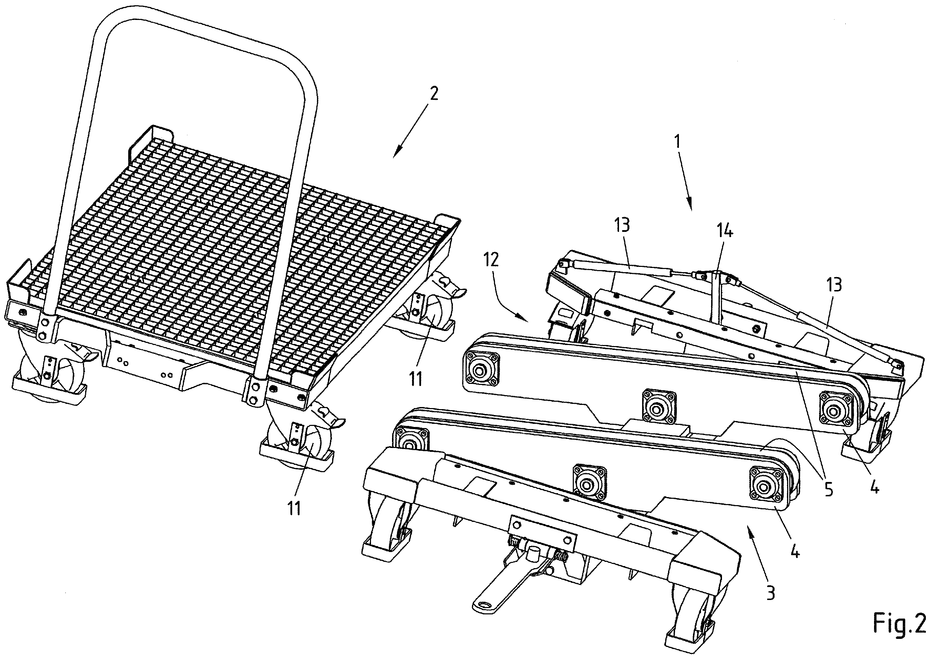

In der in Fig. 2 gezeigten Position des Anhängers 1 ist die Trägervorrichtung 3 in einer zur in Blickrichtung linken Längsseite verschwenkten Position dargestellt, um den Plattformwagen 2 von der linken Seite des Anhängers 1 aufzunehmen. Die Trägervorrichtung 3 des dargestellten und insoweit bevorzugten Anhängers 1 könnte aber alternativ auch zur rechten Längsseite verschwenkt sein, um ein Flurförderfahrzeug von dort aufzunehmen.

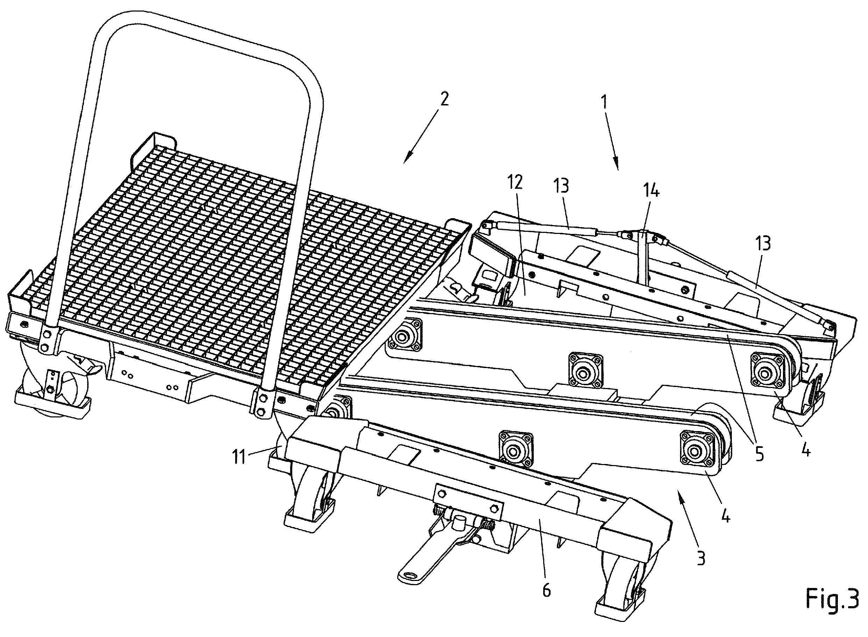

Das Flurförderfahrzeug 2 befindet sich links neben dem Anhänger 1 und ist zur Aufnahme auf dem Anhänger 1 vorpositioniert, insbesondere in geeigneter Weise zum Anhänger 1 ausgerichtet. Das Flurförderfahrzeug 2 wird im nächsten Schritt gegen die Trägervorrichtung 3 geschoben und gelangt dabei in die in Fig. 3 dargestellte Position. Das Flurförderfahrzeug 2 und die Übernahmeeinrichtung 5 stehen dabei in reibschlüssigem Kontakt. Die dem Anhänger 1 zugewandten Laufrollen 11 des Flurförderfahrzeugs 2 befinden sich zudem in Aussparungen in Form von Spalten 12 zwischen den Trägerarmen 4 und den Traversen 6.

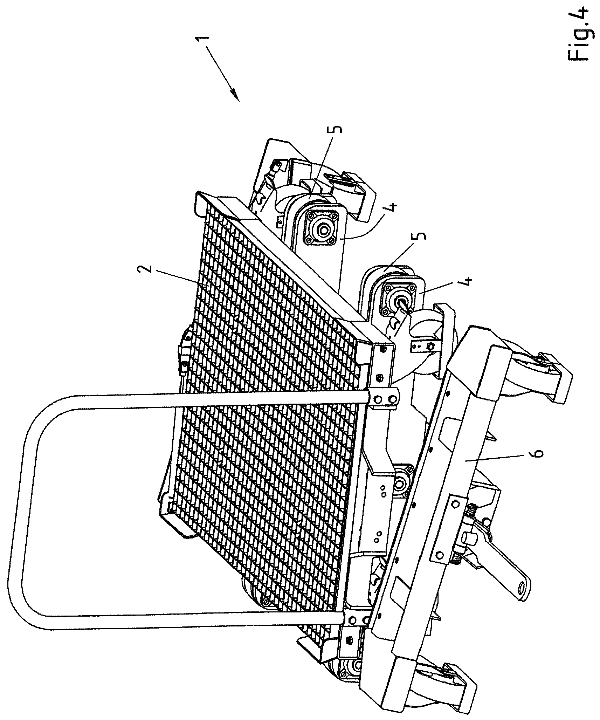

Die Übernahmeeinrichtungen 5 in Form von Bandförderern sind über einen Antrieb angetrieben, um das Flurförderfahrzeug 2 auf den Anhänger 1 zu ziehen, bis der Plattformwagen 2 vorzugsweise etwa mittig auf den Trägerarmen 4 der Trägervorrichtung 3 positioniert ist. Eine entsprechende Position des Flurförderfahrzeugs 2 ist in der Fig. 4 dargestellt.

Es kann alternativ aber auch auf einen Antrieb der Übernahmeeinrichtungen 5 verzichtet werden. Dann wird das Flurförderfahrzeug 2 händisch auf die Übernahmeeinrichtung 5 geschoben. Das Aufschieben bedarf infolge der als Bandförderer ausgebildeten Übernahmeeinrichtung 5 keines übermäßigen Kraftaufwands.

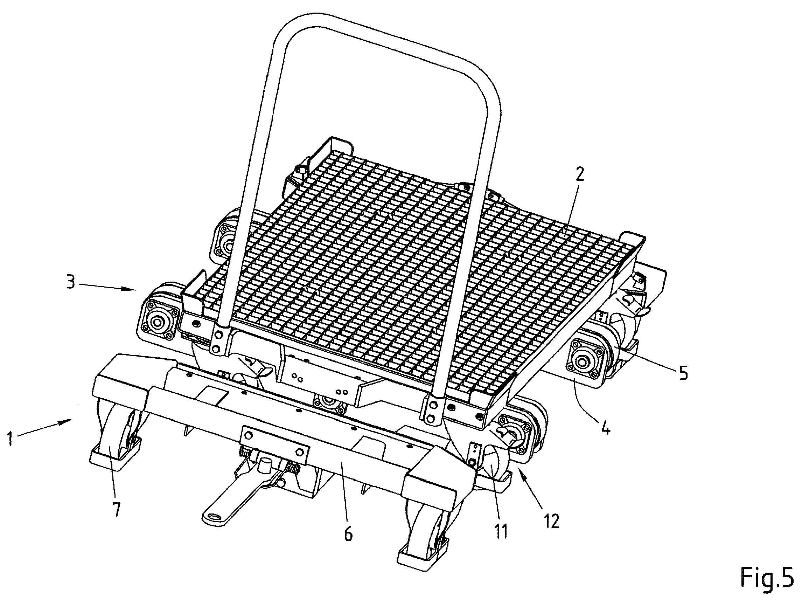

Anschließend wird die Trägervorrichtung 3 in Blickrichtung nach rechts verschwenkt, bis die in Fig. 5 dargestellte Position erreicht ist. Bedarfsweise kann das Verschwenken der Trägervorrichtung 3 aber auch schon erfolgen, während das Flurförderfahrzeug 2 auf die Trägervorrichtung 3 gezogen oder in eine etwa mittige Position auf der Übernahmeeinrichtung 5 bewegt wird. Beim dargestellten und insoweit bevorzugten Anhänger 1 wird die Trägervorrichtung 3 so weit verschwenkt, bis diese und/oder das Flurförderfahrzeug 2 im Wesentlichen parallel zum Boden ausgerichtet sind. In dieser Position kann der Anhänger 1 mitsamt dem aufgenommenen Flurförderfahrzeug 2 verfahren werden, ohne dass die Rollen des Flurförderfahrzeugs 2 den Boden berühren. Zudem kann das Flurförderfahrzeug 2 reibschlüssig auf der Übernahmeeinrichtung 5 gehalten werden. Es kann bedarfsweise aber auch eine formschlüssige Halterung des Flurförderfahrzeugs 2 vorgesehen sein. Zudem können die Übernahmeeinrichtungen 5 durch eine Blockiervorrichtung etwa in Form einer Bremse oder einer Verrastungsvorrichtung blockiert werden.

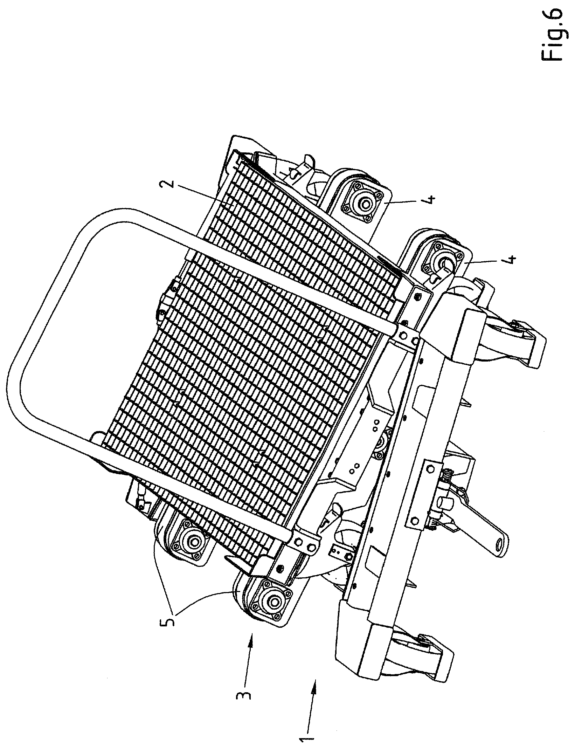

Um das Flurförderfahrzeug 2 nach dem Transport mit dem Anhänger 1 wieder abzusetzen, wird die Trägervorrichtung 3 erneut verschwenkt. Bei dem in Fig. 6 dargestellten Fall erfolgt das Verschwenken der Trägervorrichtung 3 zu der in Blickrichtung rechten Längsseite, um das Flurförderfahrzeug 2 zur rechten Seite des Anhängers 1 abzusetzen. Bei dem dargestellten und insoweit bevorzugten Anhänger 1 könnte die Trägervorrichtung 3 aber auch nach links verschwenkt werden, wenn das Flurförderfahrzeug 2 zur linken Seite abgesetzt werden soll.

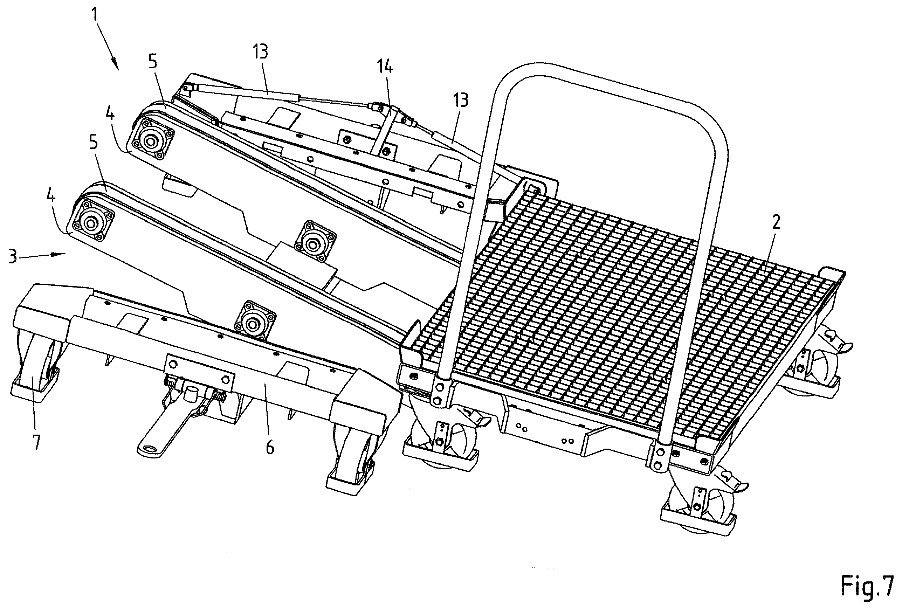

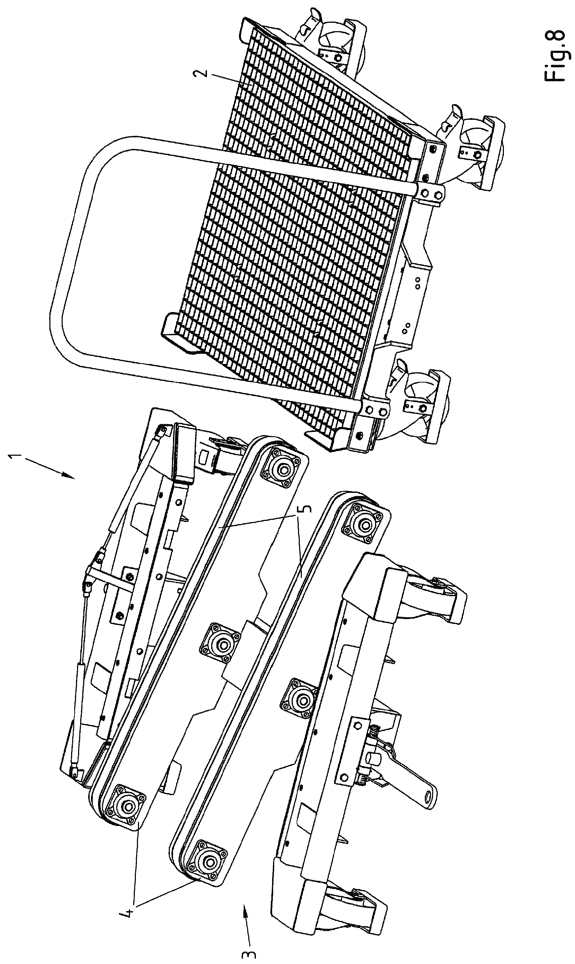

Zum Absetzen des Flurförderfahrzeugs 2 sind die Übernahmeeinrichtungen 5 angetrieben. Das reibschlüssig auf den Übernahmeeinrichtungen 5 ruhende Flurförderfahrzeug 2 wird nach unten transportiert, bis das Flurförderfahrzeug 2 auf dem Boden abgesetzt ist. Dies ist in den Fig. 7 und 8 dargestellt.

Ein Antrieb der Übernahmeeinrichtung 5 ist jedoch nicht erforderlich. Das Flurförderfahrzeug 2 kann auch manuell von der Übernahmeeinrichtung 5 runtergeschoben bzw. gezogen werden, bis das Flurförderfahrzeug 2 neben dem Anhänger 1 auf dem Boden steht.

Zudem kann das Verschwenken der Trägervorrichtung 3 manuell, manuell mit unterstützenden Systemen oder über einen Antrieb, bedarfsweise automatisch, erfolgen.

Beim dargestellten und insoweit bevorzugten Anhänger 1 erfolgt das Verschwenken der Trägervorrichtung 3 manuell. Das Verschwenken der Trägervorrichtung 3 wird durch zwei Gasdruckfedern 13 unterstützt, die über einen schwenkbaren Hebel 14, vorzugsweise drehstarr, mit der Trägervorrichtung 3 verbunden sind. Die Gasdruckfedern 13 können an einander gegenüberliegenden Seiten des Hebels 14 angreifen, so dass die Verschwenkung des Hebels 14 jeweils in Richtung der Rückstellkraft einer der beiden Gasdruckfedern 13 erfolgt. Das Verschwenken der Trägervorrichtung 3 nach links und/oder nach rechts führt dabei vorzugsweise in eine stabile über die Gasdruckfedern 13 gehaltene Position der Trägervorrichtung 3. Auch kann die Anlenkung der Gasdruckfedern 13 an den Hebel 14 und die Wahl der Gasdruckfedern 13 so erfolgen, dass die Trägervorrichtung 3 in der in Fig. 5 dargestellten Position sicher gehalten und ein versehentliches Verschwenken zu einer Seite verhindert wird.

Das Versperren der Trägervorrichtung 3 kann grundsätzlich jedoch auch auf eine andere als die zuvor beschriebene Weise erfolgen. Insbesondere kann beispielsweise eine Verriegelung der Trägervorrichtung 3 in der Position gemäß Fig. 5 vorgesehen sein, bei der es sich etwa um eine formschlüssige Verriegelung handeln kann. Dadurch kann erreicht werden, dass das Flurförderfahrzeug sicher auf dem Anhänger 1 aufgenommen wird.

## Patentansprüche

1. Anhänger (1) mit einer Trägervorrichtung (3) zum Transport mindestens eines Flurförderfahrzeugs (2), insbesondere handbetriebenen Flurförderfahrzeugs, und mit Verbindungseinrichtungen (9,10) zum Verbinden des Anhängers (1) mit weiteren gleichartigen Anhängern (1) an einander gegenüberliegenden Querseiten, wobei die Trägervorrichtung (3) zwischen zwei den Querseiten zugeordneten Traversen (6) vorgesehen und zur Aufnahme des Flurförderfahrzeugs (2) von einer Längsseite ausgebildet ist, wobei die Trägervorrichtung (3) wenigstens zwei parallele, jeweils eine Übernahmeeinrichtung (5) zur Aufnahme eines Flurförderfahrzeugs (2) aufweisenden Trägerarm (4) aufweist und wobei die Übernahmeeinrichtung (5) in Form einer Transporteinrichtung ausgebildet ist, die dem Transport des Flurförderfahrzeugs (2) auf den Anhänger (1) dient, wobei entweder mindestens eine Antriebseinrichtung zum Antrieb der wenigstens einen Übernahmeeinrichtung (5) vorgesehen ist, um das Flurförderfahrzeug (2) auf die Übernahmeeinrichtung (5) zu ziehen, oder die Übernahmeeinrichtung (5) dazu ausgebildet ist, um das Flurförderfahrzeug (2) händisch auf die Übernahmeeinrichtung (5) zu schieben, und wobei die Trägervorrichtung (3) von einer Transportstellung zu einander gegenüberliegenden Längsseiten des Anhängers (1) verschwenkbar ausgebildet ist,
**dadurch gekennzeichnet, dass**
der wenigstens eine Trägerarm (4) und die Übernahmeeinrichtung (5) dazu ausgebildet sind, in einer zu einer Längsseite des Anhängers (1) verschwenkten Stellung der Trägervorrichtung (3) zwischen Laufrollen (11) unter das Flurförderfahrzeug (2) zu greifen, dass zwischen dem wenigstens einen Trägerarm (4) und den Traversen (6) ein durchgehender Spalt (12) zum Eingreifen von Laufrollen (11) des Flurförderfahrzeugs (2) in der Transportstellung vorgesehen ist und dass die Trägerarme (4) von einer zwischen den Traversen (6) vorgesehenen Welle gehalten werden.

2. Anhänger nach Anspruch 1,
**dadurch gekennzeichnet, dass** die Übernahmeeinrichtung (5) wenigstens eine als Rollenförderer und/oder Bandförderer ausgebildete Transporteinrichtung aufweist.

3. Anhänger nach Anspruch 1 oder 2,
**dadurch gekennzeichnet, dass** die Übernahmeeinrichtung (5) eine Blockiervorrichtung zum Blockieren der Transporteinrichtung aufweist.

4. Anhänger nach einem der Ansprüche 1 bis 3,
**dadurch gekennzeichnet, dass** die mindestens eine Antriebseinrichtung eine elektromechanische, elektrohydraulische, hydraulische oder pneumatische Antriebseinrichtung ist.

5. Anhänger nach einem der Ansprüche 1 bis 4,
**dadurch gekennzeichnet, dass** die Übernahmeeinrichtung (5) einen Zahnriemen mit einer äußeren Verzahnung und/oder eine Mitnehmerkette aufweist.

6. Anhänger nach einem der Ansprüche 1 bis 5,
**dadurch gekennzeichnet, dass** mindestens eine Antriebseinrichtung, vorzugsweise elektromechanische, elektrohydraulische, hydraulische oder pneumatische Antriebseinrichtung, zum Verstellen der Trägervorrichtung zu wenigstens einer der Längsseiten vorgesehen sind.

7. Anhänger nach einem der Ansprüche 1 bis 6,
**dadurch gekennzeichnet, dass** eine Sicherungsvorrichtung zur Lagesicherung der Trägervorrichtung in der Transportstellung vorgesehen ist.

8. Anhänger nach einem der Ansprüche 1 bis 7,
**dadurch gekennzeichnet, dass** zur Positionierung der Trägervorrichtung in der Transportstellung und/oder wenigstens einer zu einer Längsseite verstellten Stellung wenigstens eine Gasdruckfeder vorgesehen ist.

9. Anhänger nach einem der Ansprüche 1 bis 8,
**dadurch gekennzeichnet, dass** die zwei parallelen Trägerarme jeweils eine Transporteinrichtung aufweisen.

10. Anhänger nach einem der Ansprüche 1 bis 9,
**dadurch gekennzeichnet, dass** sich die Transporteinrichtung, vorzugsweise die beiden Trägerarme, in Richtung wenigstens einer der Längsseiten verjüngen.

11. Anhänger nach einem der Ansprüche 1 bis 10,
**dadurch gekennzeichnet, dass** die Traversen mittig in Längsrichtung verbunden sind.

12. Anhänger nach einem der Ansprüche 1 bis 11,
**dadurch gekennzeichnet, dass** die Transportvorrichtung über die wenigstens eine Gasdruckfeder mit den Traversen verbunden ist.

## Claims

1. Trailer (1) comprising a support device (3) for transporting at least one floor conveyor (2), in particular a hand-operated floor conveyor, and comprising connecting devices (9, 10) for connecting the trailer (1) to other similar trailers (1) at opposite transverse sides, wherein the support device (3) is provided with two cross members (6) associated with the transverse sides and is designed to support the floor conveyor (2) from one longitudinal side, wherein the support device (3) has at least two parallel carrier arms (4) each having a transferring device (5) for supporting a floor conveyor (2) and wherein the transferring device (5) is in the form of a transport device, for the purpose of transporting the floor conveyor (2) on the trailer (1), wherein either at least one drive mechanism for driving at least one transferring device (5) is provided, in order to pull the floor conveyor (2) onto the transferring device (5), or the transferring device (5) is designed in order to push the floor conveyor (2) manually onto the transferring device (5), and wherein the support device (3) is designed to be pivotable from a transporting position to opposite longitudinal sides of the trailer (1), **characterised in that** the at least one carrier arm (4) and the transferring device (5) are designed, in a position of the support device (3) pivoted towards a longitudinal side of the trailer (1), to engage between rollers (11) below the floor conveyor, that between the at least one carrier arm (4) and the cross members (6) a continuous gap (12) is provided and for engagement of rollers (11) of the floor conveyor (2) in the transport position, and that the carrier arms (4) are retained by a shaft provided between the cross members (6).

2. Trailer according to claim 1, **characterised in that** the transferring device (5) has at least one transport device designed as a roller conveyor or a belt conveyor.

3. Trailer according to claim 1 or 2, **characterised in that** the transferring device (5) has a blocking device for blocking the transport device.

4. Trailer according to one of claims 1 to 3, **characterised in that** the at least one drive mechanism is an electromechanical, electrohydraulic, hydraulic or pneumatic drive mechanism.

5. Trailer according to one of claims 1 to 4, **characterised in that** the transferring device (5) has a toothed belt with an external tooth system and/or a carrier chain.

6. Trailer according to one of claims 1 to 5, **characterised in that** at least one drive mechanism, preferably an electromechanical, electrohydraulic, hydraulic or pneumatic drive mechanism, is provided for adjusting the support device in relation to at least one of the longitudinal sides.

7. Trailer according to one of claims 1 to 6, **characterised in that** a securing device is provided for ensuring the positional stability of the support device in the transport position.

8. Trailer according to one of claims 1 to 7, **characterised in that** for positioning the support device in the transport position and/or at least one position adjusted in relation to a longitudinal side at least one gas pressure spring is provided.

9. Trailer according to one of claims 1 to 8, **characterised in that** the two parallel carrier arms each have a transport device.

10. Trailer according to one of claims 1 to 9, **characterised in that** the transport device, preferably both carrier arms, taper in the direction of at least one of the longitudinal sides.

11. Trailer according to one of claims 1 to 10, **characterised in that** the cross members are connected centrally in the longitudinal direction.

12. Trailer according to one of claims 1 to 11, **characterised in that** the transport device is connected via the at least one gas pressure spring with the cross members.

## Revendications

1. Remorque (1) munie d'un dispositif de support (3) pour le transport d'au moins un chariot de manutention (2), en particulier d'un chariot de manutention à commande manuelle, et pourvue d'organes de couplage (9, 10) pour le raccordement de la remorque (1) à d'autres remorques (1) du même type sur les côtés transversaux mutuellement opposés, auquel cas le dispositif de support (3) est prévu entre deux traverses (6) associées aux côtés transversaux et est conçu pour y loger un chariot de manutention (2) à partir d'un côté longitudinal, le dispositif de support (3) présentant au moins un respectivement deux dispositifs de prise en charge parallèles (5) destinés à loger le chariot de manutention (2) sur lequel se trouve un bras porteur (4) et auquel cas le dispositif de prise en charge (5) est conçu sous la forme d'un dispositif de transport qui sert au transport du chariot de manutention (2) sur la remorque (1), où l'on prévoit soit au moins un dispositif d'entraînement pour l'entraînement d'au moins un dispositif de prise en charge (5) afin de tirer le chariot de manutention (2) sur le dispositif de prise en charge (5), ou alors le dispositif de prise en charge (5) est conçu de telle sorte à permettre de faire glisser manuellement le chariot de manutention (2) sur le dispositif de prise en charge (5), et auquel cas le dispositif de support (3) est conçu de sorte à pouvoir pivoter entre une position de transport et les côtés longitudinaux mutuellement opposés de la remorque (1), **caractérisée en ce que** le au moins un bras porteur (4) et le dispositif de prise en charge (5) sont conçus de sorte à entrer en prise avec une position pivotée du dispositif de support (3), par rapport à un côté longitudinal de la remorque (1), entre les rouleaux-guide (11) sous le chariot de manutention (2), et que l'on prévoit entre au moins le un bras porteur (4) et les traverses (6) un espace continu (12) afin que les rouleaux-guide (11) du chariot de manutention (2) puissent s'engrener en position de transport, et que les bras porteurs (4) soient retenus par un arbre prévu entre les traverses.

2. Remorque selon la revendication 1, **caractérisée en ce que** le dispositif de prise en charge (5) présente au moins un dispositif de transport conçu, de préférence, comme un convoyeur à rouleaux et/ou un convoyeur à bande.

3. Remorque selon la revendication 1 ou 2, **caractérisée en ce que** le dispositif de prise en charge (5) présente un dispositif de blocage pour le blocage du dispositif de transport.

4. Remorque selon une des revendications de 1 à 3, **caractérisée en ce que** le au moins un dispositif d'entraînement est, de préférence, un dispositif d'entraînement électromécanique, électrohydraulique, hydraulique ou pneumatique.

5. Remorque selon une des revendications de 1 à 4, **caractérisée en ce que** le dispositif de prise en charge (5) présente une courroie dentée pourvue d'une denture extérieure et/ou une chaîne de traction.

6. Remorque selon une des revendications de 1 à 5, **caractérisée en ce que** l'on prévoit au moins un dispositif d'entraînement, de préférence un dispositif d'entraînement électromécanique, électrohydraulique, hydraulique ou pneumatique pour le réglage du dispositif de support sur au moins un des côtés longitudinaux.

7. Remorque selon une des revendications de 1 à 6, **caractérisée en ce que** l'on prévoit un dispositif de sécurité pour le blocage du dispositif de support en position de transport.

8. Remorque selon une des revendications de 1 à 7, **caractérisée en ce que** l'on prévoit au moins un amortisseur à pression de gaz pour le positionnement du dispositif de support en position de transport et/ou en au moins une position réglée sur le côté longitudinal.

9. Remorque selon une des revendications de 1 à 8, **caractérisée en ce que** les deux bras porteurs parallèles présentent, à chaque fois, un dispositif de transport.

10. Remorque selon une des revendications de 1 à 9, **caractérisée en ce que** le dispositif de transport, de préférence les deux bras porteurs, se rétrécissent en direction au moins d'un des côtés longitudinaux.

11. Remorque selon une des revendications de 1 à 10, **caractérisée en ce que** les traverses sont reliées au milieu dans le sens de la longueur.

12. Remorque selon une des revendications de 1 à 11, **caractérisée en ce que** le dispositif de transport est relié aux traverses par l'intermédiaire d'au moins un amortisseur à pression de gaz.
